Europäisches Patentamt

European Patent Office

Office européen des brevets

(19)

(11) Veröffentlichungsnummer: **0 004 595**

**B1**

(12) **EUROPÄISCHE PATENTSCHRIFT**

(45) Veröffentlichungstag der Patentschrift: **07.04.82**

(21) Anmeldenummer: **79100847.7**

(22) Anmeldetag: **21.03.79**

(51) Int. Cl.³: **A 62 C 37/06,**
**F 16 K 31/383,**
**F 16 K 17/40·**

(54) Steuerbares Ventil für eine Brandlöschanlage.

(30) Priorität: **10.04.78 CH 3813/78**

(43) Veröffentlichungstag der Anmeldung:
**17.10.79 Patentblatt 79/21**

(45) Bekanntmachung des Hinweises auf die Patenterteilung:
**07.04.82 Patentblatt 82/14**

(84) Benannte Vertragsstaaten:
**BE FR GB IT NL SE**

(56) Entgegenhaltungen:
**DE - A - 2 623 587**
**DE - B - 1 259 160**
**FR - A - 354 403**
**FR - A - 1 443 257**
**GB - A - 805 452**

(73) Patentinhaber: **CERBERUS AG**
**Alte Landstrasse 411**
**CH-8708 Männedorf (CH) ·**

(72) Erfinder: **Trunner, Josef**
**Brunnenweg 634**
**CH-8617 Mönchaltorf (CH)**
Erfinder: **Both, Marinus**
**Alte Landstrasse 388**
**CH-8708 Männedorf (CH)**

Courier Press, Leamington Spa, England.

## Steuerbares Ventil für eine Brandlöschanlage

Die Erfindung betrifft ein steuerbares Ventil für eine Brandlöschanlage, das einen Ventilkörper aufweist, der an eine unter Druck stehende Löschmittelzuführungsleitung und an ein Löschmittelaustrittsrohr angeschlossen wird und der an der der Löschmittelzuführungsleitung entgegengesetzten Seite durch einen Deckel verschlossen ist, in welchem eine mit einer Perforierscheibe verschlossene Bohrung zur Druckentlastung des auf der Seite des Deckels befindlichen Teils des Ventilkörperinnenraumes vorhanden ist und der im Ventilkörperinnenraum einen beweglichen Ventilkolben zum Verschluss der Löschmittelzuführungsleitung und zur Freigabe des Löschmittelflusses zum Löschmittelaustrittsrohr enthält, der an seiner der Löschmittelzuführungsleitung zugewandten Seite einen kleineren Querschnitt hat als an der dem Deckel zugewandten Seite, der eine kleine Bohrung zum langsamen Druckausgleich zwischen seiner Vorder- und Rückseite aufweist und der seitlich am Ventilkörper eine zum Anschluss des Löschmittelaustrittsrohres dienende Öffnung aufweist, die so angebracht ist, dass sie bei Verschluss der Löschmittelzuführungsleitung durch den Ventilkolben ebenfalls verschlossen ist.

Sowohl bei Brandlöschanlagen mit einzeln in der Nähe des zu schützenden Objekts bzw. Raums angeordneten Löschmittelbehältern als auch bei Brandlöschanlagen mit zentral angeordneter Löschmittelbehälter-Batterie werden die einzelnen Behälter üblicherweise durch Ventile verschlossen. Auf diese Weise wird das Entweichen des Löschmittels, z.B. Kohlendioxid, Halon, Trockenlöschpulver, Schaum oder Wasser, aus den Behältern in das Rohrsystem der Anlage verhindert.

Im Brandfall werden die Ventile manuell oder durch eine Brandmeldeanlage automatisch geöffnet, und dadurch wird der Löschmittelfluss durch ein Rohrsystem zu den Austrittsdüsen am Brandort freigegeben.

Bei bekannten Ventilen für Brandlöschanlagen sind die folgenden Arbeitsprinzipien am gebräuchlichsten:

1. Steuerkolbensystem, wobei das Ventil im Normalfall mit einem Ventilteller, auf den der Druck des Löschmittels wirkt, geschlossen gehalten wird; zur Oeffnung des Ventils wird ein Steuerkolben mit Druck beaufschlagt, wodurch der Ventilteller über einen, als Verbindung zwischen Ventilteller und Steuerkolben dienenden Schaft zurückgedrückt wird. Der Steuerdruck kann dabei einer separaten Steuerdruckleitung entnommen oder vom Löschmitteldruck selbst über ein Vorsteuerventil abgezweigt werden.

2. Perforierscheibensystem, bei dem eine Metallmembran durchtrennt wird, indem ein ringförmiger Steuerkolben eine Hohlnadel in Bewegung setzt.

3. Mechanisch verriegelte Ventile, bei denen der Ventilkolben mechanisch gegen den Löschmitteldruck geschlossen gehalten wird.

Ein grosser Teil der vorbekannten Löschmittelventile arbeitet nach dem Steuerkolbenprinzip. Dieses ist zwar ziemlich sicher, erfordert jedoch einen komplizierten und relativ teuren Aufbau des Ventils. Zur Oeffnung des Ventiles muss die Steuerkolbenseite druckbeaufschlagt werden. Dies kann mit dem separaten Steuerdruck einer Gaspatrone bzw. Hilfsflasche oder mit dem Druck des Löschmittelbehälters selbst erfolgen, indem dieser über eine Hilfsleitung mit einem Hilfssteuerventil aus dem Löschmittelbehälter selbst entnommen wird. Ein Nachteil ist bei dieser Ventilart, dass sich Ventilteller und Schaft während des Ausströmens des Löschmittels im Strömungsquerschnitt befinden, somit einen erheblichen Strömungswiderstand darstellen. Durch dieses Arbeitsprinzip ist der relativ grosse Aussendurchmesser des Steuerzylinders bedingt. Dies führt häufig dazu, dass diese Ventile gar nicht oder nur mit grossem Aufwand mit den erforderlichen Schutzkappen für den Transport ausgerüstet werden können.

Ein kleiner Teil der bekannten Ventile arbeitet nach dem Perforierscheibensystem. Der benötigte Druck für den Steuerkolben wird dabei häufig aus Hilfsdruckflaschen entnommen, oder es werden zur Druckerzeugung Sprengkapseln eingesetzt. Die beim Oeffen nicht vollständig herausgetrennte Membran ragt dabei in den Strömungsquerschnitt hinein, wodurch dieser verringert wird, ferner entsteht durch Lösen von fixierten Membranteilen eine Verstopfungsgefahr; und schliesslich muss nach jeder Betätigung die Perforiermembran ersetzt werden.

Es sind auch rein mechanisch verriegelte Ventile bekannt. Diese sind meistens sehr einfach gebaut und daher billig herzustellen. Ihre Eigensicherheit bei durch Erwärmung hervorgerufener Druckerhöhung der gasförmigen Löschmittelfüllung ist jedoch nicht sehr hoch. Ihr grösster Nachteil besteht in dem für eine sichere Oeffnung erforderlichen hohen Kraftaufwand.

Weiter ist bei den vorbekannten Löschmittelventilen nachteilig, dass der Auslösemechanismus nicht ohne weiteres, d.h. ohne Löschmittelverlust, auf seine Funktionstüchtigkeit überprüft werden kann und dass der Schliesszustand nur mit Schwierigkeiten von aussen überwacht werden kann.

Ausserdem sind die vorbekannten Löschmittelventile meistens so gestaltet, dass ihre Ventilkörper aus Guss- oder Pressrohlingen komplizierter Form hergestellt werden müssen, wodurch die Herstellung kompliziert und aufwendig wird. Diese komplizierte äussere Form verhindert es auch, dass solche, unter Druck stehenden Ventile beim Transport auf einem Löschmittelbehälter durch einfache Schutzhauben geschützt werden können.

In der DE—A—2 623 587 ist eine Druckgasarmatur beschrieben, deren Ventilkörper mehrere seitliche Ansätze zur Einführung einer Sicherheitsvorrichtung oder einer Auslösevorrichtung, bzw. eines Ableitungsrohres aufweist. Es ist daher nicht möglich, den Ventilkörper aus einem handelsüblichen Metallrohr herzustellen. Ferner ist es wegen der sperrigen Bauart nicht möglich, die Druckgasarmatur, wenn sie auf Gasbehälter montiert ist, während des Transportes durch eine einfache Ventilschutzkappe zu schützen. Wegen des starren Ansatzstutzens mit Gewinde zum Anschluss des Austrittsrohres treten bei der Montage an fest montierte Löschmitteleinrichtungen Schwierigkeiten auf, wenn die Anschlussrohre nicht genau die vorgeschriebene Richtung aufweisen.

Aufgabe der Erfindung ist es, die erwähnten Nachteile vorbekannter Löschmittelventile zu beseitigen und insbesondere ein Löschmittelventil mit geringem Strömungswiderstand zu schaffen, welches sich einfach und kostengünstig aus handelsüblichen, nicht speziell dafür angefertigten Rohmaterialien herstellen lässt, welches eine solche Form aufweist, dass es durch eine einfache Ventilschutzkappe abdeckbar ist und welches beim Anschluss an fest montierte Löschmittelanlagen einen Ausgleich von Winkelfehlern der Anschlussrohre ermöglicht.

Diese Aufgabe wird bei einem steuerbaren Ventil für eine Brandlöschanlage gemäss Oberbegriff des Patentanspruchs 1 dadurch gelöst, dass der Ventilkörper aus einem Metallrohr gefertigt ist, dass die zum Anschluß des Löschmittelaustrittsrohres dienende Öffnung als eine konische Form aufweisende Austrittsbohrung in der Wandung des Metallrohres ausgebildet ist, und dass sich der Ventilkolben in geöffentem Zustand des Ventils in einem Abstand von der Ruhelage befindet, der grösser ist als der Durchmesser der Austrittsbohrung, so dass sich der Ventilkolben dabei vollständig ausserhalb des Strömungswegs befindet.

Figur 1 zeigt ein Ventil in geschlossenem Zu-stand mit Transportsicherung und Schutz-kappen im Längsschnitt.

Figur 2 zeigt das Ventil in geöffnetem Zustand mit einer pneumatischen Ansteuereinheit und angeschlossenem Austrittsrohr, im Längsschnitt.

Figur 3 zeigt das Ventil im gleichen Zustand im Querschnitt.

Figur 4 zeigt eine Ansteuereinheit in Ausgangsposition im Längsschnitt.

Figure 5 zeigt diese Ansteuereinheit in Seitenansicht.

Figur 6 zeigt diese Ansteuereinheit in Aufsicht.

Figur 7 zeigt eine Sicherungsklammer.

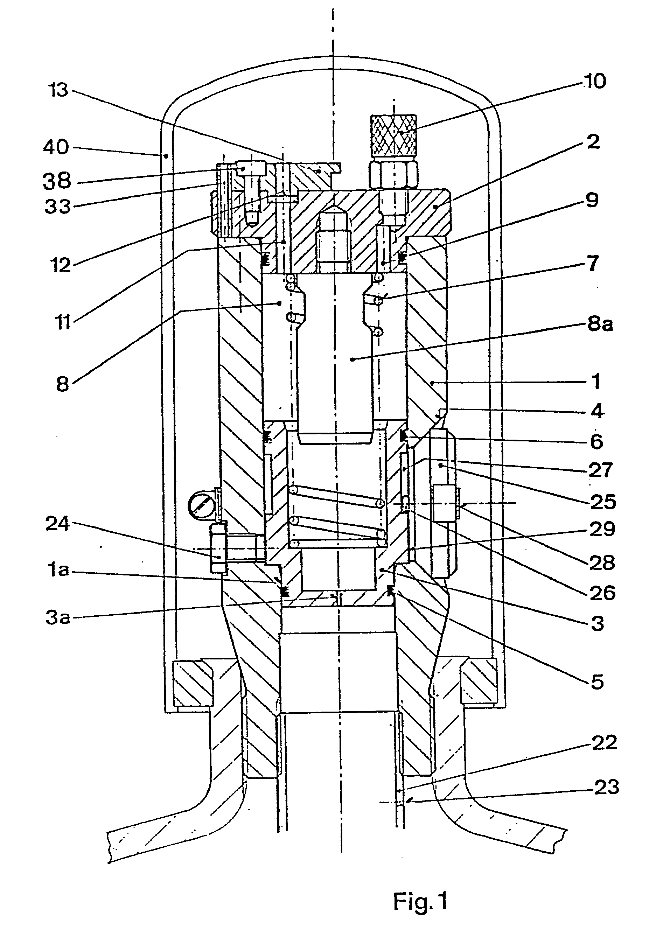

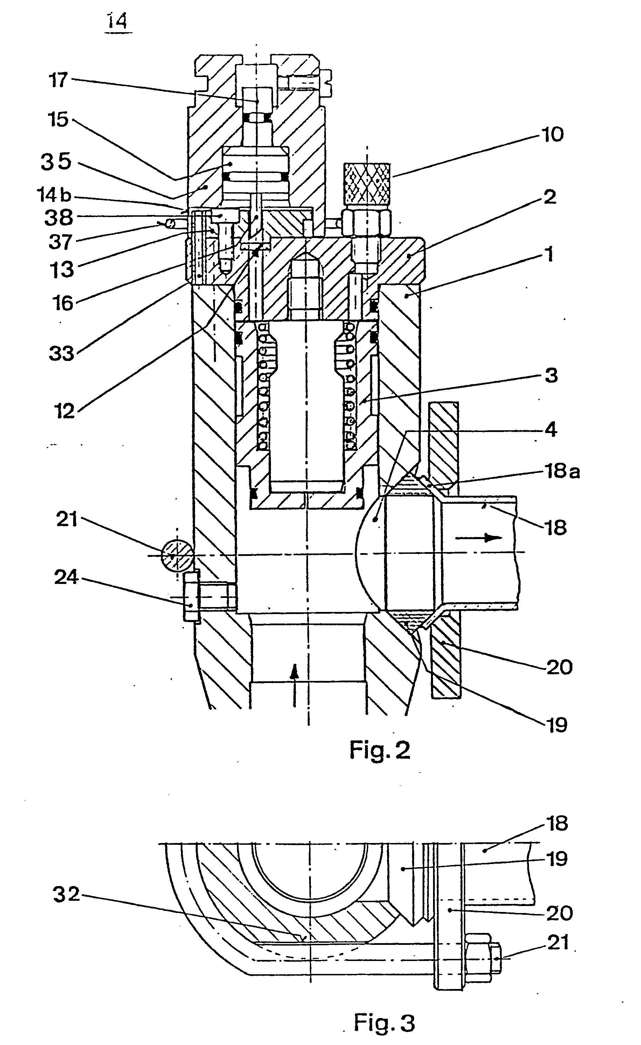

Das in den Figuren 1, 2 und 3 dargestellte Ventil besteht aus einem aus dickwandigem Metallrohr gefertigten Ventilkörper 1, welches an dem der Zuführungsleitung entgegengesetzten Ende durch einen Deckel 2 verschlossen ist. Der Ventilkörper 1 ist innen mit einer abgestuften Hauptbohrung versehen, wobei der kleinere Durchmesser sich auf der Seite der Zuführungsleitung befindet. In dieser Bohrung kann sich der Ventilkolben 3 linear bewegen. Seitlich ist im Ventilkörper 1 eine Austrittsbohrung 4 für den Anschluss des Austrittsrohres 18 vorgesehen und zwar so, dass sie in der unteren geschlossenen Ventilkolbenstellung gasdicht verschlossen ist. Die Abdichtung des Ventilkolbens 3 gegen den Ventilkörper 1 geschieht mit zwei O-Ringen 5 und 6. Eine Druckfeder 7 hält den Ventilkolben 3 in der unteren Position, wenn an der Zuführungsleitung kein Löschmitteldruck vorhanden ist. Im Ventilkolbenboden ist ein kleines Loch 3a vor-gesehen, welches einen verhältnismässig lang-samen Druckausgleich zwischen dem Ventil-körperinnenraum 8 an der Rückseite des Kolbens und der dem Löschmitteldruck ausgesetzten Vorderseite ermöglicht. Dieses Loch dient somit als Druckausgleichskanal.

Der Deckel 2 ist mit Kopfschrauben auf dem Ventilkörper 1 befestigt und enthält zwei durchgehende Bohrungen 9 und 11. Der im Deckel 2 befestigte Kolbenanschlag 8a dient gleichzeitig als Führung der Druckfeder 7. Die eine Bohrung 9 ist durch eine handelsübliche Schnellkupplung 10 mit integriertem Rückschlagventil abgeschlossen. Sie dient im Betrieb zum Anschluss eines Manometers oder eines Pressostaten. Beim Füllvorgang dient sie zur Entlüftung des Flaschenventils. Die andere Bohrung 11 ist durch eine Perforierscheibe 12 verschlossen, die mit einem Zwischenflansch 13 im Deckel 2 befestigt ist.

Im unteren Ende der Hauptbohrung des Ventilkörpers 1 ist mittels eines normalen Rohrgewindes die Zuführungsleitung oder das Tauchrohr 22 eingesetzt. Knapp unter dem Anschlussgewinde ist im Tauchrohr 22 ein kleines Loch 23 vorgesehen, durch welches der gasförmige Teil des Flascheninhaltes entweichen kann, wenn das Ventil eine kleine Undichtigkeit aufweisen würde. Bei kleinen Leckraten bleibt somit der flüssige oder feste Anteil des Löschmittels annähernd erhalten und das Entweichen des gasförmigen Anteiles des Löschmittelinhaltes ergibt einen Druckabfall, der gemessen werden kann.

Gegenüber der Austrittsbohrung 4 ist eine Kontroll- und Steueranschlussbohrung 24 vor-gesehen, die eine Verbindung zur Haupt-bohrung darstellt. Sie hat zwei Funktionen:

1. Nach Beendigung des Füllvorganges muss der Ventilkolben wieder in die Ausgangsposition zurückkehren, damit eine einwandfreie Dichtung des Ventils gewährleistet ist. Die Bohrung wird dazu mit einem speziellen Stopfen verschlossen und die Ventilkolbenstellung kann nun optisch oder induktiv ermittelt werden.

2. Bei Installation des Ventils in einer Anlage, die aus mehr als einer Löschmittelflasche besteht, muss prinzipiell nur ein Ventil von der Brandmeldeanlage angesteuert werden. Die restlichen Flaschenventile, Folgeventile genannt, werden pneumatisch mit einer einfachen Ansteuereinheit aktiviert. Der dazu erforderliche Steuerdruck wird durch die Steueranschlussbohrung 24 dem ersten, dem sogenannten Pilotventil entnommen. Die Bohrung 24 ist druckbeaufschlagt, sobald der untere O-Ring 5 des Ventilkolbens 3 die entsprechende Bohrung 1a des Ventilkörpers 1 verlassen hat. Die Folgeventile werden nach Ansteuerung des Pilotventils mit einer geringen Zeitverzögerung ebenfalls öffnen. Die Zahl der vom Pilotventil ansteuerbaren Folgeventile liegt erfahrungsgemäss bei 10 bis 15. Wenn mehr Ventile gleichzeitig angesteuert werden sollen, so müssen entsprechend mehr Pilotventile direkt von der Brandmeldeanlage angesteuert werden.

Bei dem beschriebenen Ausführungsbeispiel ist der Austrittsrohranschluss ohne das bei vorbekannten Ventilen übliche Rohrgewinde konzipiert. Dazu ist die Austrittsbohrung 4 konisch ausgeführt. Das Austrittsrohr 18 besitzt ebenfalls einen konisch aufgeweiteten Rand 18a. Zwischen dem Rand 18a und der konischen Fläche der Austrittsbohrung 4 befindet sich ein Dichtring 19 mit konischen, schwach bombierten Flächen. Ein Flansch 20 mit angeschrägtem Innendurchmesser liegt auf dem Rand 18a des Austrittsrohres auf. Ein um den Ventilkörper 1 verlaufender Bügel 21 aus Rundstahl mit Schraubgewinde und zugehörige Muttern, pressen den Flansch 20 auf den Rand 18a des Austrittsrohres 18 und damit wird der Dichtring 19 zwischen den konischen Flächen des Randes 18a und der Austrittsbohrung 4 eingeklemmt. Damit ist eine einfache und zweckmässige Verbindung zwischen Austrittsrohr 18 und dem Ventilkörper 1 hergestellt. Die Verbindungsart ermöglicht ebenfalls einen Ausgleich von Winkelfehlern des Austrittsrohres 18 bei der Montage. Der Anschluss des Austrittsrohres 18 am Rohrsystem der Löschanlage kann auf analoge Weise erfolgen.

Der Ventilkörper 1 besitzt auf der Höhe der Austrittsbohrung 4 um 90° versetzt zwei angefräste Flächen 32. Sie dienen einerseits bei der Montage des Ventils auf den Löschmittelbehälter zum Ansetzen eines Werkzeuges und andererseits wird durch die untere Anfräsungsbegrenzung die vertikale Position des Bügels 21 bestimmt, und zwar so, dass die Mitte des Bügels 21 mit der Mitte der Austrittsbohrung 4 zusammenfällt, wodurch die Montage beim Installieren der Löschmittelbehälter in der Anlage erleichtert wird.

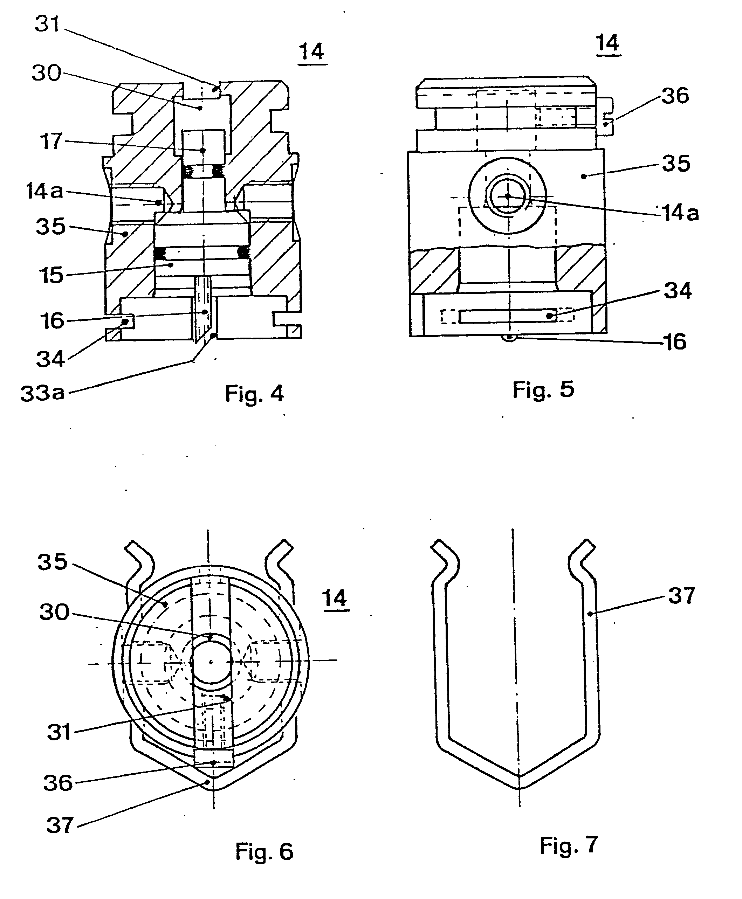

Die in den Figuren 4, 5 und 6 wiedergegebene pneumatische Ansteuereinheit 14 ist auf dem erwähnten Zwischenflansch 13 mittels einer Sicherungsklammer 37 montiert. Die Sicherungsklammer 37 wird von der Seite in die Schlitze 34 der Ansteuereinheit 14 eingeschoben. Die Sicherungsklammer 37 führt nun, wenn die Ansteuereinheit 14 auf dem Zwischenflansch 13 aufgesetzt ist, unter dem vorstehenden Bund des Zwischenflansches 13 durch und fixiert somit die Ansteuereinheit 14 im axialen Sinne auf dem Zwischenflansch 13. Durch die etwas vorstehenden Schraubenköpfe 38 vom Zwischenflansch 13 entsteht ein Spalt 14b zwischen Ansteuereinheit 14 und Flansch 13. Die Position der pneumatischen Ansteuereinheit 14 bzw. deren Gehäuse 35 ist gegenüber dem Zwischenflansch 13 und gegenüber dem Ventildeckel 2 durch den Positionierstift 33 und den Positionierschlitz 33a im Gehäuse 35 der Ansteuereinheit 14 gegeben. Diese Ansteuereinheit 14 besteht aus dem Gehäuse 35, worin sich der Steuerkolben 15 mit der Perforiernadel 16 und dem Stössel 17 bewegen kann. Zwei seitliche, einander gegenüberliegende Gewindebohrungen 14a ermöglichen den Anschluss von Steuerleitungen. Die Abdichtung des Steuerkolbens 15 bzw. des Stössels 17 gegen das Gehäuse 35 geschieht mit O-Ringen. Diese O-Ringe bewirken ebenfalls eine so hohe Reibung, dass der Steuerkolben 15 bei drucklosem Zustand in der oberen Position gehalten wird und die Perforiernadel 16 die erwähnte Perforierscheibe 12 nicht berührt.

Der Stössel 17 ragt mit dem oberen Ende in die Kammer 30 hinein. Diese Kammer 30 weist einen Durchmesser auf, der Grösser als die Breite des Schlitzes 31 ist. Der Positionierstift 36 dient zur Fixierung der Position der Auslöseeinheit 14. Dieser Stift 36 hat zusammen mit dem Schlitz 31 und der Kammer 30 den Zweck, beim Zusammenbau einer Auslöseeinheit mit der pneumatischen Ansteuereinheit ein ungewolltes Ansteuern des Ventils zu verhindern, indem dies nur bei gespanntem Zustand der Auslöseeinheit möglich ist. Dabei kann der Stössel 17 nicht betätigt werden.

Die Arbeitsweise des Löschmittelventils ist die folgende: Beim Herunterdrücken des Steuerkolbens 15 als Folge einer Druckbeaufschlagung über die Bohrung 14a oder als Folge der Ausübung einer Kraft auf den Stössel 17 durchtrennt die als Hohlnadel ausgebildete Perforiernadel 16 die Perforierscheibe 12, worauf sich der Raum 8 oberhalb des Ventilkolbens 3 über die Bohrung 11 und den Entlüftungsspalt 14b unter dem Steuerkolben 15 entlüften kann. Oberhalb des Ventilkolbens 3 findet nun ein rascher Druckabfall statt, der nicht sofort und vollständig durch Nachströmen von Gas durch die kleine Bohrung 3a im Ventilkolbenboden kompensiert werden kann. Von der Behälterseite her wird dadurch eine positive Druckdifferenz entstehen, so dass nunmehr eine Kraft auf den Ventilkolben 3 einwirkt, welche diesen gegen die Schliesskraft der Feder 7 und den Restdruck im Raum 8 oberhalb des Ventilkolbens nach oben bewegt. Somit wird nun die Austrittsbohrung 4 freigegeben und das Löschmittel kann vom Tauchrohr 22 durch den Ventilkörper 1 im wesentlichen unbehindert in das Austrittsrohr 18 strömen.

Nachdem der Behälterdruck auf nahezu Atmosphärendruck abgefallen ist, kehrt der Ventilkolben 3 unter der Kraft der Feder 7 wiederum in seine Ausgangsstellung zurück und schliesst die Austrittsbohrung. Dadurch wird verhindert, dass Staub und/oder Kondenswasser in den Löschmittelbehälter eindringt, wodurch Korrosion und Störungen der Anlage bei erneuter Inbetriebnahme verhindert werden.

Beim Füllvorgang wird, nachdem die Austrittsbohrung 4 druckbeaufschlagt ist, der Raum oberhalb des Ventilkolbens 3 mittels der Schnellkupplung 10 entlüftet, wodurch sich der Ventilkolben als Folge des Druckunterschiedes nach oben bewegt und dadurch die Ventilquerschnittsbohrung 1a zur Löschmitteleinfüllung freigibt. Nunmehr wird über eine Füllvorrichtung die an die Austrittsbohrung 4 angeschlossen wird, Löschmittel in den Behälter eingefüllt, bis der Betriebsdruck erreicht ist. Nach Beendigung des Füllvorgangs wird die Schnellkupplung 10 geschlossen. Jetzt wird der Ventilkolben 3 durch die Druckfeder 7 nach unten gedrückt bis der O-Ring 5 in der Ventilquerschnittbohrung 1a zum Anliegen kommt und der Ventilkolben 3 das Tauchrohr 22 abdichtet. Bei Druckentlastung der Austrittsbohrung 4 wird der Ventilkolben 3 durch die Differenz der Druckkräfte an seiner Unter- und Oberseite in der unteren, das Tauchrohr 22 abdichtenden Position gehalten.

Das erste oder sogenannte Pilotventil der Anlage wird mamuell oder von der Brandmeldeanlage angesteuert und die weiteren oder Folgeventile werden nun über ein Steuerleitung und einzig mit der pneumatischen Ansteuereinheit ausgelöst.

Um das Ventil vor dem unabsichtlichen Oeffnen sowie die innere Bohrung und den Ventilkolben 3 vor Verschmutzungen zu schützen, ist es bei dem beschriebenen Ausführungsbeispiel möglich, eine einfache Transportsicherung 25, 28 vorzusehen. Diese besteht im wesentlichen aus einem Drehteil 25 mit konischem Sitz, welcher der Konizität der Austrittsbohrung 4 angepasst ist. Auf der im Montierten Zustand dem Ventilkolben 3 zugekehrten Seite dieses Drehteiles 25 ist ein Bolzen 26 angebracht, der in eine Nut 27 des Ventilkolbens 3 hineinragt und zwar so, dass die untere Begrenzungsfläche dieser Nut 27 den Bolzen 26 nahezu berührt. Der Drehteil wird zusätzlich mit einem kurzen zylindrischen Ansatz 29 im zylindrischen Teil der Austrittsbohrung 4 zentriert und durch eine rings um den Ventilkörper 1 angelegte und im Drehteil 25 eingerastete Schlauchbride 28 gehalten. Bei korrekt eingebauter Transportsicherung kann nun, bedingt durch den in die Ventilkolbenbahn hineinragenden Bolzen 26, sich der Ventilkolben 3 nicht nach oben bewegen, womit ein Oeffnen des Ventiles verhindert wird. Ein weiterer Vorteil dieser Sicherungsart ist die, bezogen auf den Ventilkörper-Aussendurchmesser, sehr geringe Baubreite. Dies wiederum führt zu einer schlanken Konstruktion, auf welche eine einfache und preisgünstige Ventilschutzkappe 40 aufgesetzt werden kann.

Das erfindungsgemässe Ventil weist den grossen Vorteil auf, dass die Ansteuereinheit 14 im druckbeaufschlagten Zustand aufgesetzt werden kann. Dadurch ist es möglich, die Löschmittelbehälter mit dem aufgesetzten Ventil einheitlich zu konfektionieren und erst später zu entscheiden, in welcher Weise die Auslösung des Ventils vorgenommen werden soll.

Ferner kann man die fertig montierte Löschanlage auf ihre Funktionstüchtigkeit prüfen, ohne dass Löschmittelbehälter angeschlossen sind, d.h. ohne dass Austritt von Löschmittel zu befürchten ist.

Ein weiterer Vorteil besteht darin, dass man nach dem Auslösen des Ventils die Einsatzbereitschaft der Anlage sehr leicht wieder herstellen kann, da das Einsetzen einer neuen Perforierscheibe 12 sehr einfach ist. Ein Vorteil des erfindungsgemässen Ventils besteht darin, dass beim Einsetzen der Perforierscheibe keinerlei Torsionswirkung auf die Scheibe ausgeübt wird. Bei den bekannten Ventilen mit Berstscheibe erfolgt beim Aufschrauben der Berstscheibenhalterung häufig eine Verbiegung der dünnen Berstscheiben, was zu einer Fehlauslösung führen kann.

## Patentansprüche

1. Steuerbares Ventil für eine Brandlöschanlage, das einen Ventilkörper (1) aufweist, der an eine unter Druck stehende Löschmittelzuführungsleitung (22) und an ein Löschmittelaustrittsrohr (18) angeschlossen wird und der an der der Löschmittelzuführungsleitung (22) entgegengesetzten Seite durch einen Deckel (2) verschlossen ist, in welchem eine mit einer Perforierscheibe (12) verschlossene Bohrung (11) zur Druckentlastung des auf der Seite des Deckels (2) befindlichen Teils des Ventilkörperinnenraumes (8) vorhanden ist und der im Ventilkörperinnenraum (8) einen beweglichen Ventilkolben (3) zum Verschluss der Löschmittelzuführungsleitung (22) und zur Freigabe des Löschmittelflusses zum Löschmittelaustrittsrohr (18) enthält, der an seiner der Löschmittelzuführungsleitung (22) zugewandten Seite einen kleineren Querschnitt hat als an der dem Deckel (2) zugewandten Seite, der eine kleine Bohrung (3a) zum langsamen Druckausgleich zwischen seiner Vorder- und Rückseite aufweist und der seitlich am Ventilkörper (1) eine zum Anschluss des Löschmittelaustrittsrohres (18) dienende Öffnung (4) aufweist, die so angebracht ist, dass sie bei Verschluss der Löschmittelzuführungsleitung (22) durch den Ventilkolben (3) ebenfalls verschlossen ist, dadurch gekennzeichnet, dass der Ventilkörper (1) aus einem Metallrohr gefertigt ist, dass die zum Anschluß des Löschmittelaustrittsrohres (18) diennende Öffnung (4) als eine konische Form aufweisende Austrittsbohrung in der Wandung des Metallrohres ausgebildet ist, und dass sich der Ventilkolben (3) in geöffnetem Zustand des Ventils in einem Abstand von der Ruhelage befindet, der grösser ist als der Durchmesser der Austrittsbohrung, so dass sich der Ventilkolben (3) dabei vollständig ausserhalb des Strömungsweges befindet.

2. Ventil gemäss Anspruch 1, dadurch gekennzeichnet, dass am Deckel (2) ein zylinderförmiger Kolbenanschlag (8a) vorgesehen ist, der gleichzeitig als Führung einer Druckfeder (7) dient, die auf den Kolben (3) eine Kraft in Richtung auf die Zuführungsleitung (22) ausübt, um den Kolben (3) in der unteren Position zu halten, wenn an der Zuführungsleitung kein Löschmitteldruck vorhanden ist, und dass der Längsschnitt des Kolbens (3) U-förmig ausgebildet ist, wodurch der Kolben (3) bei Oeffnung des Ventils über den Kolbenanschlag (8a) gleitet und sich nicht mehr im Strömungsquerschnitt befindet.

3. Ventil gemäss Anspruch 1, dadurch gekennzeichnet, dass der Kolben (3) am Umfang eine Nut (27) aufweist, in welche durch die Oeffnung (4) für das Austrittsrohr ein Bolzen (26) einer Einrichtung (25) zur Blockierung der Kolbenbewegung einzugriefen vermag.

4. Ventil gemäss Anspruch 1, dadurch gekennzeichnet, dass der Ventilkörper (1) eine weitere Bohrung (24) zum Anschluss von Steuerleitungen für weitere Ventile aufweist.

5. Ventil gemäss Anspruch 1, dadurch gekennzeichnet, dass auf den Deckel (2) eine Ansteuereinheit (14), die eine Perforiernadel (16) zur Durchtrennung der Perforierscheibe (12) aufweist, im druckbeaufschlagten Zustand des Ventils aufsetzbar ist.

6. Ventil gemäss Anspruch 5, dadurch gekennzeichnet, dass die Ansteuereinheit (14) pneumatisch betätigbar ist.

7. Ventil gemäss Anspruch 5, dadurch gekennzeichnet, dass die Ansteuereinheit (14) mechanisch betätigbar ist.

8. Ventil gemäss Anspruch 1, dadurch gekennzeichnet, dass der Deckel (3) eine weitere Bohrung (9) zum Anschluss eines Manometers oder zue Entlüftung beim Füllvorgang aufweist.

## Claims

1. Controllable valve for a fire extinguishing system, comprising a valve body (1) for connection to a feed pipe (22) containing a fire extinguishing agent under pressure, and to a fire extinguishing agent outlet pipe (18) and which at the end opposite to the fire extinguishing agent feed pipe (22) is sealed by a cover (2) in which is provided a drilling (11) closed by a perforating disc (12) arranged on the side of the cover (2) for relieving the pressure in the valve body inner chamber (8) and which in the valve body inner chamber (8) contains a displaceable valve piston (3) for closing the fire extinguishing agent feed pipe (22) and for allowing the fire extinguishing agent to flow out of the fire extinguishing agent outlet pipe (18), which has a smaller diameter at its end facing the fire extinguishing agent feed pipe (22) than at its end facing the cover (2), which has a small drilling (3a) for the slow pressure equalization between its front and rear end and which has an outlet drilling (4) on the side of the valve body (1) for connection to the fire extinguishing agent outlet pipe (18) which outlet drilling (4) is so arranged that during closure of the extinguishing agent feed pipe (22) by the valve piston (3) this outlet drilling 4 is also closed, characterised in that the valve body (1) is constructed from a metal pipe, in that the opening (4) serving as the connection for the fire extinguishing agent outlet pipe (18) is arranged in the form of a conical outlet bore in the wall of the metal pipe and that in the open condition of the valve the valve piston (3) is arranged at a distance from the rest position which is greater than the diameter of the outlet drilling (4), the valve piston (3) thereby being arranged completely outside the flow path.

2. Valve according to Claim 1, characterized in that fixed to the cover (2) there is a cylindrical piston buffer (8a) which simultaneously serves as the guide for a pressure spring (7) which exerts the force onto the piston (3) in the direction towards the feed pipe (22) in order to hold the piston (3) in the lower position when the fire extinguishing agent in the feed pipe is under no pressure and that the longitudinal cross-section of the piston (3) is U-shaped, whereby on opening of the valve the piston (3) passes over the piston buffer (8a) and is no longer located in the area of the flow cross-section.

3. Valve according to Claim 1, characterized in that on the circumference of the piston (3) there is provided a groove (27) which, through the opening (4) for the outlet pipe, is engaged by a bolt (26) of a device (25) for blocking the piston movement.

4. Valve according to Claim 1, characterized in that the valve body (1) has a further drilling (24) for connecting control pipes for further valves.

5. Valve according to Claim 1, characterized in that a master unit 14 comprising a perforating needle (16) for puncturing the perforating disc (12) can be mounted on the cover (2) when the valve is under pressure.

6. Valve according to Claim 5, characterized in that the master unit (14) is pneumatically operated.

7. Valve according to Claim 5, characterized in that the master unit (14) is mechanically operated.

8. Valve according to Claim 1, characterized in that the cover (3) has a further drilling (9) for connecting to a manometer or for venting during the filling process.

## Revendications

1. Vanne pilotée pour une installation d'extinction d'incendie, qui comprend un corps de vanne (1) qui est raccordé à un conduit sous pression d'amenée (22) d'un agent extincteur et à un tuyau de sortie (18) de l'agent extincteur et qui est fermé, du côté opposé au conduit d'amenée (22) de l'agent extincteur, par un couvercle (2) dans lequel est prévu un perçage (11) obturé par un disque à perforer (12) en vue de la décharge en pression de la partie de la chambre intérieure (8) du corps de vanne située du côté du couvercle (2) et qui contient dans la chambre intérieure (8) du corps de vanne un piston de vanne mobile (3) destiné à obturer le conduit d'amenée (22) de l'agent extincteur et à donner à l'écoulement de l'agent extincteur libre passage vers le tuyau de sortie (18) de l'agent extincteur, piston dont la partie tournée vers le conduit d'amenée (22) de l'agent extincteur a une section transversale plus petite que la partie tournée vers le couvercle (2) et qui présente un petit perçage (3a) destiné à permettre la lente égalisation des pressions entre sa partie antérieure et sa partie postérieure, ledit corps de vanne (1) comportant un perçage de sortie (4) servant à raccorder le tuyau de sortie (18) de l'agent extincteur et étant agencé de manière à être obturé également par le piston de vanne (3) lors de l'obturation du conduit d'amenée (22) de l'agent extincteur, caractérisée en ce que le corps de vanne (1) est fabriqué en un tuyau métallique, en ce que l'ouverture (4) servant au raccordement du tuyau de sortie (18) de l'agent extincteur est constituée par un perçage de sortie ménagé dans la paroi du tuyau métallique et ayant une forme conique et en ce que le piston de vanne (3) se trouve. lorsque la vanne est à l'état ouvert, à une distance de la position de repos qui est supérieure au diamètre du perçage de sortie (4) de sorte que le piston de vanne (3) se trouve entièrement en dehors du trajet de l'écoulement.

2. Vanne selon la revendication 1, caractérisée en ce que sur le couvercle (2) est prévue, pour le piston, une butée cylindrique (8a) qui sert, en même temps, à guider un ressort de pression (7) qui applique sur le piston (3) une force dans la direction du conduit d'amenée (22), afin de maintenir le piston (3) dans la position inférieure, lorsque le conduit d'amenée est dépourvu de pression de l'agent extincteur, et en ce que la section longitudinale du piston (3) a la forme d'un U, en sorte que le piston (3) glisse sur la butée de piston (8a) lors de l'ouverture de la vanne et ne se trouve plus dans la section transversale de l'écoulement.

3. Vanne selon la revendication 1, caractérisée en ce que le pourtour du piston (3) présente une gorge (27) dans laquelle peut s'accrocher, à travers l'ouverture (4) pour le tuyau de sortie, une cheville (26) d'un dispositif (25) destiné à bloquer le mouvement du piston.

4. Vanne selon la revendication 1, caractérisée en ce que le corps de vanne (1) présente un autre perçage (24) destiné au raccordement de conduits de commande pour d'autres vannes.

5. Vanne selon la revendication 1, caractérisée en ce que sur le couvercle (2) peut être placée, lorsque la vanne est chargée en pression, une unité de commande (14), qui présente une aiguille perforante (16) destinée à perforer le disque (12) à perforer.

6. Vanne selon la revendication 5, caractérisée en ce que l'unité de commande (14) peut être actionnée par voie pneumatique.

7. Vanne selon la revendication 5, caractérisée en ce que l'unité de commande (14) peut être actionnée par voie mécanique.

8. Vanne selon la revendication 1, caractérisée en ce que le couvercle (2) présente un autre perçage (9) destiné à raccorder un manomètre ou à chasser l'air lors de l'opération de remplissage.

0 004 595

Fig. 1

0 004 595

Fig. 2

Fig. 3

Fig. 4

Fig. 5

Fig. 6

Fig. 7